# EUROPEAN PATENT APPLICATION

(11) **EP 2 390 740 A2**
(43) Date of publication of application: **30.11.2011**
(21) Application number: 11164712.9
(22) Date of filing: 04.05.2011
(51) Int. Cl.: G05B 19/418, G06Q 10/00

(54) **Autonomous machine selective consultation**

(30) Priority: 27.05.2010 US 788995
(71) Applicant: Deere & Company, Moline, IL 61265-8098 (US)
(72) Inventor: Anderson, Noel W, Fargo, ND 58102 (US)
(74) Representative: Holst, Sönke

(57) **Abstract**

A system for selective consultation comprises a number of autonomous machines and a selective consultation system. The number of autonomous machines is configured to perform area coverage tasks in a worksite. The selective consultation system is configured to resolve issues encountered during operation of the number of autonomous machines in the worksite.

## Description

### Field of the Invention

The present invention relates generally to systems and methods for navigation and more particularly to systems and methods for mobile robotic navigation. Still more specifically, the present disclosure relates to a method and system for selective consultation by autonomous machines.

### Background of the Invention

The use of robotic devices to perform physical tasks has increased in recent years. Mobile robotic devices can be used to perform a variety of different tasks. These mobile devices may operate in semi-autonomous or fully autonomous modes.

Autonomous machines may encounter unknowns during operation that require intervention by a human operator or manager. An owner or manager may not always be available to assist the autonomous machine, which can result in the machine remaining inactive for a period of time until the issue is addressed and resolved. In these cases where machine autonomy is not complete, it is beneficial to have a robust means of having a human available to assist the machine so it does not sit inactive and can resume its autonomous activity.

### Summary

The different illustrative embodiments provide a system for selective consultation comprising a number of autonomous machines and a selective consultation system. The number of autonomous machines is configured to perform tasks in a worksite. The selective consultation system is configured to resolve issues encountered during operation of the number of autonomous machines in the worksite.

The different illustrative embodiments further provide a method for selective consultation. A number of tasks is performed in a worksite using an autonomous machine. The autonomous machine identifies an issue that requires human intervention. A human is selected to direct the issue to using an issue database. The issue is transmitted to the human selected. A response is received from the human selected.

The features, functions, and advantages can be achieved independently in various embodiments of the present invention or may be combined in yet other embodiments in which further details can be seen with reference to the following description and drawings.

### Brief Description of the Drawings

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present invention when read in conjunction with the accompanying drawings, wherein:
Figure 1 is a block diagram of a worksite environment in which an illustrative embodiment may be implemented;
Figure 2 is a block diagram of a data processing system in accordance with an illustrative embodiment;
Figure 3 is a block diagram of a selective consultation system in accordance with an illustrative embodiment;
Figure 4 is a block diagram of a mobility system in accordance with an illustrative embodiment;
Figure 5 is a block diagram of a sensor system in accordance with an illustrative embodiment; and
Figure 6 is a flowchart illustrating a process for selective consultation in accordance with an illustrative embodiment.

### Description of the Preferred Embodiment

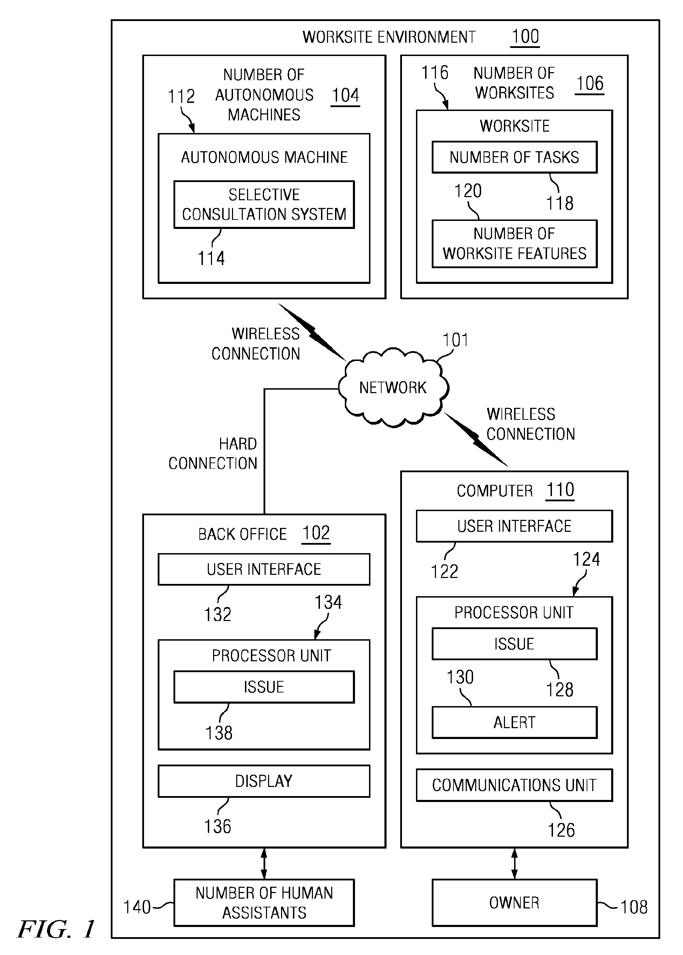

With reference to the figures and in particular with reference to Figure 1, a block diagram of a worksite environment is depicted in which an illustrative embodiment may be implemented. Worksite environment 100 may be any type of worksite environment in which an autonomous machine can operate. In an illustrative example, worksite environment 100 may be a structure, building, worksite, area, yard, golf course, indoor environment, outdoor environment, and/or any other suitable worksite environment or combination of worksite environments.

Worksite environment 100 includes network 101 in one embodiment of the present invention. In this example, back office 102 may be a single computer or a distributed computing cloud. Back office 102 supports the physical databases and/or connections to external databases which may be used in the different illustrative embodiments. Back office 102 may supply databases to different machines, as well as provide online access to information from databases. Back office 102 may also provide instructions for vehicles and/or machines, such as number of autonomous machines 104, for example. Worksite environment 100 may include number of autonomous machines 104, number of worksites 106, owner 108, and computer 110. As used herein, a "number of items" mean one or more items. For example, number of worksites 106 is one or more worksites.

In this illustrative example, owner 108 is a person having a relationship with number of autonomous machines 104 such as, for example, without limitation, owning, managing, operating, supervising, and/or maintaining number of autonomous machines 104.

Number of autonomous machines 104 may be any type of autonomous machine including, without limitation, a mobile robotic machine, a service robot, a field robot, a robotic mower, a robotic snow removal machine, a robotic leaf removal machine, a robotic lawn watering machine, a robotic vacuum, a robotic floor cleaner, a material gathering machine, a material application machine, a sensing machine, and/or any other autonomous machine. Autonomous machine 112 is an illustrative example of one implementation of an autonomous machine from number of autonomous machines 104.

As used herein, autonomous machines may also include semi-autonomous machines, which have an operator on-board or nearby to perform one or more functions. These functions may include, without limitation, one or more of guidance, safeguarding, diagnosis, task monitoring, task control, or data recording. The different illustrative embodiments may be useful when an issue exceeds the competency of the operator for resolution.

Autonomous machine 112 includes selective consultation system 114. Selective consultation system 114 provides a base system for identifying and resolving issues encountered by autonomous machine 112. An issue is a decision that autonomous machine 112 cannot make without assistance. For example, in an area coverage task, an issue may be an obstacle encountered that does not correspond to a recognized or mapped obstacle. In another example, an issue may be a number of machine operation parameters or number of task performance parameters with values outside of normal bounds and for which there is no pre-programmed response. In yet another example, an issue may be a step in a task, such as crossing a street, for which explicit human confirmation is required from a safety or liability perspective. Base system capabilities may include base behaviors such as, for example, without limitation, identifying an issue that autonomous machine 112 cannot resolve independently, selecting assistance for the issue identified, receiving resolution of the issue identified, and/or any other combination of basic functionality for autonomous machine 112.

Number of worksites 106 may be any area within worksite environment 100 in which number of autonomous machines 104 can operate. Each worksite in number of worksites 106 may be associated with a number of tasks. Worksite 116 is an illustrative example of one worksite in number of worksites 106. For example, in an illustrative embodiment, worksite 116 may be a yard surrounding a residence of owner 108. In another illustrative embodiment, worksite 116 may be a factory building for product manufacturing, for example. Worksite 116 includes number of tasks 118. In an illustrative example, number of tasks 118 may include mowing the yard of the residence of owner 108. Number of tasks 118 may be any type of area coverage task including, without limitation, a service task, a field task, mowing, snow removal, leaf removal, lawn watering, vacuuming, cleaning, material gathering, material application, sensing, data collection, product assembly, and/or any other type of task. Autonomous machine 112 may operate to perform number of tasks 118 within worksite 116. As used herein, "number of items" refers to one or more items. In one illustrative example, number of worksites 106 may include, without limitation, a primary yard and a secondary yard. The primary yard may be worksite 116, associated with number of tasks 118. The secondary yard may be associated with another set of tasks, for example. In one illustrative example, the secondary yard may be in the same geographical location as the primary yard, but with different sub-regions, or worksite areas, defined for a different set of tasks than number of tasks 118.

Each worksite in number of worksites 106 may include a number of worksite features. Worksite 116 includes number of worksite features 120. In an illustrative example, number of worksite features 120 may be any type of visual feature of worksite 116, including, without limitation, landmarks, vegetation, structures, wildlife, buildings, driveways, sidewalks, curbs, fences, ground cover, flowering plants, and/or any other suitable visual feature. Autonomous machine 112 may navigate number of worksite features 120 during operation within worksite 116. When autonomous machine 112 encounters a feature within worksite 116 that is unknown, autonomous machine 112 may employ selective consultation system 114 to determine the identity of the feature, in an illustrative example.

Owner 108 may be, without limitation, a human operator, a robotic operator, or some other external system. Computer 110 may be any type of data processing device, which allows owner 108 to interact with number of autonomous machines 104. Computer 110 includes user interface 122, processor unit 124, and communications unit 126. Selective consultation system 114 may send an identified issue 128 to computer 110 in order to acquire resolution from owner 108, in an illustrative example. Processor unit 124 generates alert 130 to notify owner 108 that issue 128 is awaiting resolution. Owner 108 may address issue 128 using user interface 122 to view and input a resolution. Processor unit 124 may transmit the resolution to selective consultation system 114 using communications unit 126.

Back office 102 includes user interface 132, processor unit 134, and display 136. Selective consultation system 114 may send identified issue 138 to back office 102 in order to seek resolution from a human assistant other than owner 108 based on a number of conditions. For example, selective consultation system 114 may determine that owner 108 is unavailable for immediate assistance, in one illustrative embodiment. In another illustrative embodiment, selective consultation system 114 may determine that number of human assistants 140 have relevant expertise to address issue 138 identified during operation of autonomous machine 112 within worksite 116, for example. As used herein, selective consultation refers to the system selection of a particular human assistant to consult when an issue is encountered.

In an illustrative example, once a human assistant is selected, they are contacted to provide the support. This contact could include, for example, without limitation, initiation of an instant messaging session, a pop-up window opening on a computer screen, a text message alerting the assistant to connect to a centralized web site from their phone, and/or receiving a telephone call where the assistant can listen to a machine generated voice description of the issue and then provide resolution by pressing phone buttons or by speaking to a speech recognition system. The issue resolution activities of the human assistant may include, without limitation, interacting with the machine via a user interface, selecting an option in a menu after receiving a description of the issue, or teleoperating the machine, for example.

The illustration of worksite environment 100 in Figure 1 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

The different illustrative embodiments recognize and take into account that currently used methods for robotic assistance often rely on a general pool of centralized human assistance without the ability to select the assistance needed for a specific issue encountered. Current approaches to autonomous machine issue resolution have deficiencies. One such deficiency is that the owner may not be the best person to resolve an issue based on interest, availability, and/or expertise. When an issue is sent to a consultant for resolution, it is desirable to have the issue resolved quickly, correctly, and inexpensively. To meet response requirements, centralized "help desks" are often used which are staffed to meet a certain expected level of demand. If this demand estimate is too low, response times rise. If the number of dedicated human assistants is too high, hourly labor rate costs are too high. Help desks also incur costs for running the centralized facility.

Thus, the different illustrative embodiments provide a system for selective consultation comprising a number of autonomous machines and a selective consultation system. The number of autonomous machines is configured to perform tasks in a worksite. The selective consultation system is configured to resolve issues encountered during operation of the number of autonomous machines in the worksite.

The different illustrative embodiments further provide a method for selective consultation. A number of tasks is performed in a worksite using an autonomous machine. The autonomous machine identifies an issue that requires human intervention. A human is selected to direct the issue to using an issue database. The issue is transmitted to the human selected. A response is received from the human selected.

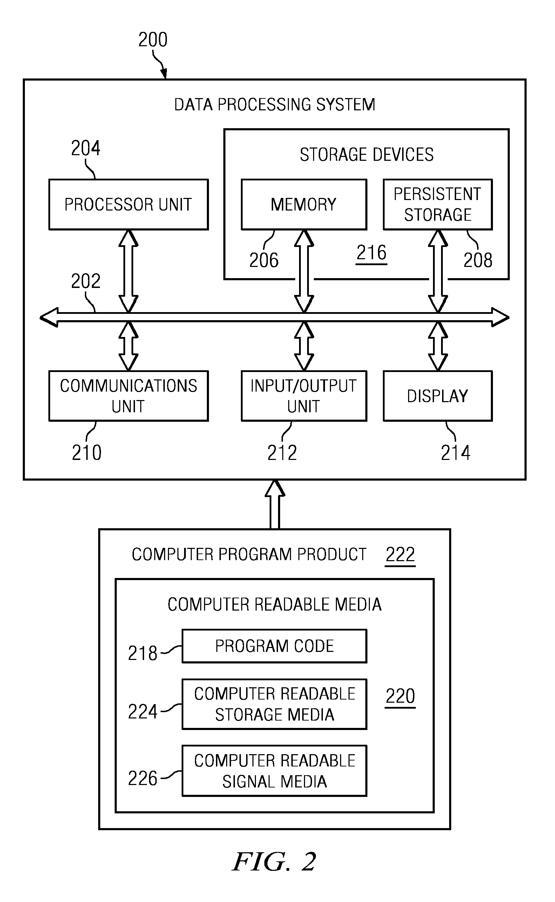

With reference now to Figure 2, a block diagram of a data processing system is depicted in accordance with an illustrative embodiment. Data processing system 200 is an example of a computer, such as back office 102 in Figure 1, in which computer usable program code or instructions implementing the processes may be located for the illustrative embodiments.

In this illustrative example, data processing system 200 includes communications fabric 202, which provides communications between processor unit 204, memory 206, persistent storage 208, communications unit 210, input/output (I/O) unit 212, and display 214.

Processor unit 204 serves to execute instructions for software that may be loaded into memory 206. Processor unit 204 may be a set of one or more processors or may be a multi-processor core, depending on the particular implementation. A number as used herein with reference to an item means one or more items. Further, processor unit 204 may be implemented using one or more heterogeneous processor systems in which a main processor is present with secondary processors on a single chip. As another illustrative example, processor unit 204 may be a symmetric multi-processor system containing multiple processors of the same type.

Memory 206 and persistent storage 208 are examples of storage devices 216. A storage device is any piece of hardware that is capable of storing information, such as, for example without limitation, data, program code in functional form, and/or other suitable information either on a temporary basis and/or a permanent basis. Memory 206, in these examples, may be, for example, a random access memory or any other suitable volatile or non-volatile storage device. Persistent storage 208 may take various forms depending on the particular implementation. For example, persistent storage 208 may contain one or more components or devices. For example, persistent storage 208 may be a hard drive, a flash memory, a rewritable optical disk, a rewritable magnetic tape, or some combination of the above. The media used by persistent storage 208 also may be removable. For example, a removable hard drive may be used for persistent storage 208.

Communications unit 210, in these examples, provides for communications with other data processing systems or devices. In these examples, communications unit 210 is a network interface card. Communications unit 210 may provide communications through the use of either or both physical and wireless communications links.

Input/output unit 212 allows for input and output of data with other devices that may be connected to data processing system 200. For example, input/output unit 212 may provide a connection for user input through a keyboard, a mouse, and/or some other suitable input device. Further, input/output unit 212 may send output to a printer. Display 214 provides a mechanism to display information to a user.

Instructions for the operating system, applications and/or programs may be located in storage devices 216, which are in communication with processor unit 204 through communications fabric 202. In these illustrative examples, the instructions are in a functional form on persistent storage 208. These instructions may be loaded into memory 206 for execution by processor unit 204. The processes of the different embodiments may be performed by processor unit 204 using computer implemented instructions, which may be located in a memory, such as memory 206.

These instructions are referred to as program code, computer usable program code, or computer readable program code that may be read and executed by a processor in processor unit 204. The program code in the different embodiments may be embodied on different physical or tangible computer readable media, such as memory 206 or persistent storage 208.
[0001] Program code 218 is located in a functional form on computer readable media 220 that is selectively removable and may be loaded onto or transferred to data processing system 200 for execution by processor unit 204. Program code 218 and computer readable media 220 form computer program product 222 in these examples. In one example, computer readable media 220 may be computer readable storage medium 224 or computer readable signal medium 226. Computer readable storage medium 224 may include, for example, an optical or magnetic disc that is inserted or placed into a drive or other device that is part of persistent storage 208 for transfer onto a storage device, such as a hard drive that is part of persistent storage 208. Computer readable storage medium 224 also may take the form of a persistent storage, such as a hard drive, a thumb drive, or a flash memory that is connected to data processing system 200. In some instances, computer readable storage media 224 may not be removable from data processing system 200. In these illustrative examples, computer readable storage medium 224 is a non-transitory computer readable storage medium.
[0002] Alternatively, program code 218 may be transferred to data processing system 200 from computer readable media 220 using computer readable signal media 226. Computer readable signal media 226 may be, for example, a propagated data signal containing program code 218. For example computer readable signal media 226 may be an electro-magnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code 218 may be downloaded over a network to persistent storage 208 from another device or data processing system through computer readable signal media 226 for use within data processing system 200. For instance, program code stored in a computer readable storage medium in a server data processing system may be downloaded over a network from the server to data processing system 200. The data processing system providing program code 218 may be a server computer, a client computer, or some other device capable of storing and transmitting program code 218.

The different components illustrated for data processing system 200 are not meant to provide architectural limitations to the manner in which different embodiments may be implemented. The different illustrative embodiments may be implemented in a data processing system including components in addition to or in place of those illustrated for data processing system 200. Other components shown in Figure 2 can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system 200 is any hardware apparatus that may store data. Memory 206, persistent storage 208 and computer readable media 220 are examples of storage devices in a tangible form.

In another example, a bus system may be used to implement communications fabric 202 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 206 or a cache such as found in an interface and memory controller hub that may be present in communications fabric 202.

As used herein, the phrase "at least one of", when used with a list of items, means that different combinations of one or more of the items may be used and only one of each item in the list may be needed. For example, "at least one of item A, item B, and item C" may include, for example, without limitation, item A or item A and item B. This example also may include item A, item B, and item C or item B and item C.

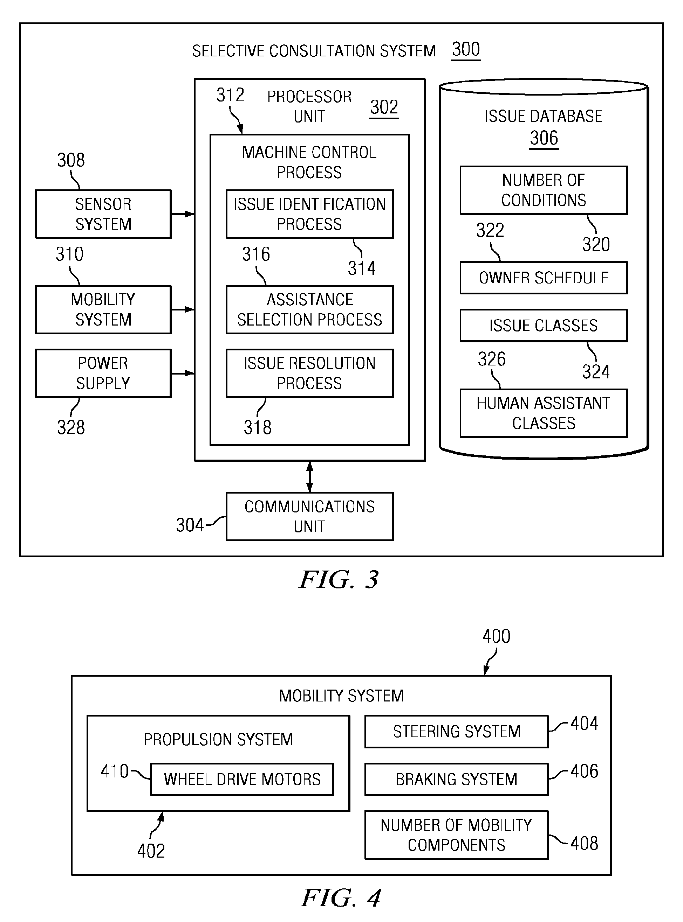

With reference now to Figure 3, a block diagram of a selective consultation system is depicted in accordance with an illustrative embodiment. Selective consultation system 300 is an example of one implementation of selective consultation system 114 in Figure 1.

Selective consultation system 300 includes processor unit 302, communications unit 304, issue database 306, sensor system 308, and mobility system 310. Processor unit 302 may be an example of one implementation of data processing system 200 in Figure 2. Processor unit 302 includes machine control process 312. Machine control process 312 controls an autonomous machine associated with selective consultation system 300, such as autonomous machine 112 in Figure 1, for example. Machine control process 312 includes issue identification process 314, assistance selection process 316, and issue resolution process 318.

Issue identification process 314 determines whether a number of conditions exist that constitute an issue. An issue is a decision that an autonomous machine associated with selective consultation system 300 cannot make without assistance. For example, a condition that constitutes an issue may be detection of an unknown or unidentified object by a sensor system associated with the autonomous machine performing the tasks within the worksite. Assistance selection process 316 determines which human from a pool of available human assistants is best suited to resolve the issue identified by issue identification process 314. In one illustrative example, assistance selection process 316 may determine that the owner of the autonomous machine associated with selective consultation system 300 is best suited to resolve an issue, for example. Assistance selection process 316 utilizes information in issue database 306 to select a particular human for assistance.

Issue resolution process 318 receives response resolutions from a number of human assistants contacted by selective consultation system 300 and applies the resolution to the issue identified by issue identification process 314. Issue resolution process 318 may apply a resolution received in a number of ways including, without limitation, updating information in issue database 306, updating task parameters for machine control process 312, updating instructions for machine control process 312 to utilize in controlling mobility system 310, and/or any other suitable resolution to address the issue identified by selective consultation system 300. Processor unit 302 may further communicate with and access data stored in issue database 306. Accessing data may include any process for storing, retrieving, and/or acting on data in issue database 306. For example, accessing data may include, without limitation, using a lookup table housed in issue database 306, running a query process using issue database 306, and/or any other suitable process for accessing data stored in a database.

Processor unit 302 receives information from sensor system 308 and may use sensor information in conjunction with information from issue database 306 when controlling mobility system 310 using machine control process 312. Processor unit 302 may also receive control signals from an outside controller, such as computer 110 operated by owner 108 in Figure 1, for example. These control signals may be received by processor unit 302 using communications unit 304.

Communications unit 304 may provide communications links to processor unit 302 to receive information. This information includes, for example, data, commands, and/or instructions. Communications unit 304 may take various forms. For example, communications unit 304 may include a wireless communications system, such as a cellular phone system, a Wi-Fi wireless system, or some other suitable wireless communications system.

Communications unit 304 may also include a wired connection to an optional manual controller, such as computer 110 in Figure 1, for example. Further, communications unit 304 also may include a communications port, such as, for example, a universal serial bus port, a serial interface, a parallel port interface, a network interface, or some other suitable port to provide a physical communications link. Communications unit 304 may be used to communicate with an external control device or user, for example.

Issue database 306 contains information that issue identification process 314 and assistance selection process 316 may utilize when selecting a consultation action to execute. Issue database 306 may include, without limitation, number of conditions 320, owner schedule 322, issue classes 324, and human assistant classes 326.

Number of conditions 320 may include information about one or more conditions that, if present, constitute an issue that must be resolved using selective consultation system 300, for example. In an illustrative example, a condition that constitutes an issue may be detection of an unknown or unidentified object by sensor system 308.

In one illustrative example, an autonomous mower with a primitive random pattern area coverage algorithm includes sensor system 308 comprising a yard boundary detection sensor, an accelerometer or impact sensor, a wheel odometer, and an electronic compass. Based on numerous impacts over short distances, the mower detects a "trapped" condition for which assistance is desired. The issue may be resolved by having a human assistant guide the mower out of the tight area by specifying a path on a map or by teleoperating the mower from a laptop computer, in this illustrative example.

In another illustrative example, an autonomous mower includes sensor system 308, which includes a camera. An unidentified object appears on the lawn. The mower detects an "unidentified object on ground" issue for which assistance is desired. The image of an object is sent to the cell phone of a human assistant, for example. The human assistant replies with a text message "gao" standing for "go around object," in one illustrative example. Alternative replies may include "moa" for "move object away" and "lai" for "leave area immediately," in other illustrative examples. In yet another illustrative example, rather than texting letters in reply, the numbers corresponding to phone buttons with the letters may be sent. On a standard phone, "goa" may become "426". The assistance may be performed in under a minute, for example, by the human assistant. The human, acting for example as an independent contractor, would be credited a minimal amount, such as $0.10 for their cost of the text message and $0.10 for resolving the problem, in one illustrative example. The $0.20 could be deposited in an account such as those available through PayPal, for example. After texting the resolution to the issue, the human assistant can return to their earlier activity such as watching television, attending a university lecture, or other daily life task.

In yet another illustrative example, an autonomous tractor pulling a plow includes sensor system 308 comprising a tillage draft sensor and a tillage depth sensor. The tractor detects a "difficult plowing" issue for which assistance is desired. The issue may be resolved by the human assistant reducing the tillage depth, directing the tractor to discontinue tillage in the current location and resume tillage in another part of the field with better conditions, or to continue in spite of difficult conditions, for example.

Owner schedule 322 may be, for example, without limitation, a calendar with information about the availability of an owner, such as owner 108 in Figure 1, for consultation. Owner schedule 322 may be used by assistance selection process 316 to determine if an owner should be considered for consultation based on the date or time of the issue at hand, for example. Assistance selection may also be influenced, for example, by factors such as consultancy provisions in an autonomous machine service contract, activation of an "issue forwarding" feature, issue resolution qualifications of the owner, and/or any other suitable factor. In an illustrative example, owner schedule 322 may indicate that owner 108 in Figure 1 is unavailable between 12:00 AM and 6:00 AM on weekdays. In another illustrative example, owner schedule 322 may indicate that owner 108 in Figure 1 is unavailable from March 15, 2010 to March 21, 2010, with a vacation indicator. Owner schedule 322 may be configured and updated by owner 108 in Figure 1 over user interface 122, for example, and transmitted to issue database 306 from computer 110 using communications unit 304.

Issue classes 324 may include, without limitation, a number of different classes of issues with class definitions for each class. In an illustrative example, class issues may include, without limitation, machine response to unidentified objects in the environment, to unscheduled changes of location, to linear movement or area coverage progress falling below expectations, to task performance falling outside expectations, to a soil or ground anomaly, to crop or tree or plant anomaly, and/or any other suitable issue. For example, an unscheduled change of location may be due to a situation of theft.

Issues and classes of issues are preferentially defined at the time the autonomous machine is designed or as part of a product update. The software controlling the autonomous machine based on sensor system data may initiate issue handling if an issue was identified by a number of issue identification rules or by default if the sensed data was not handled by a number of rules defining normal operation. Issue handling may also be initiated when a measured value falls outside a predefined or calculated threshold value.

Human assistant classes 326 may include a number of different classes of human assistants accessible to selective consultation system 300. The human assistants may be classified along a number of dimensions which may include, without limitation, results of qualification testing, quality of issue resolution with similar issues in the past, degree of availability, bandwidth of connection between assistant and machine, user interface available to human assistant, and cost of issue resolution by a particular human assistant. For example, degree of availability may be classified as highly available, available, or unavailable. Different user interface options available to an assistant may be, for example, without limitation, a laptop computer or cell phone.

Mobility system 310 provides mobility for an autonomous machine, such as autonomous machine 112 in Figure 1. Mobility system 310 may take various forms. Mobility system 310 may include, for example, without limitation, a propulsion system, steering system, braking system, and mobility components. In these examples, mobility system 310 may receive commands from machine control process 312 and move an associated autonomous machine in response to those commands.

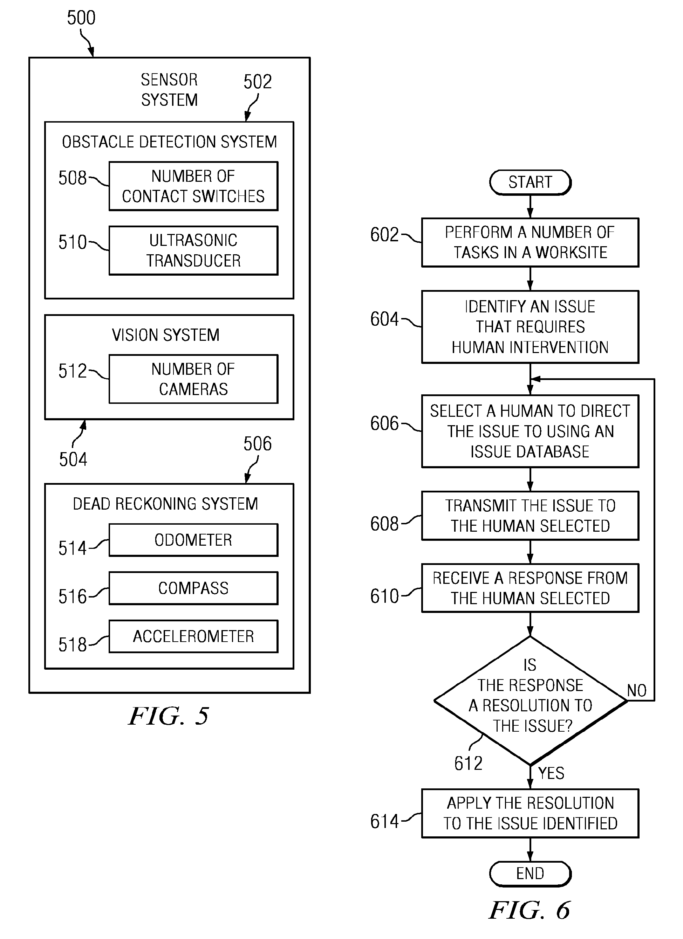

Sensor system 308 may include a number of sensor systems for collecting and transmitting sensor data to processor unit 302. For example, sensor system 308 may include, without limitation, a dead reckoning system, an obstacle detection system, an object detection system, and/or some other suitable type of sensor system, as shown in more illustrative detail in Figure 5. Sensor data is information collected by sensor system 308.

Power supply 328 provides power to components of selective consultation system 300 and the associated autonomous machine, such as autonomous machine 112 in Figure 1, for example. Power supply 328 may include, without limitation, a battery, mobile battery re-charger, ultra-capacitor, fuel cell, gas powered generator, photo cells, and/or any other suitable power source.

The illustration of selective consultation system 300 in Figure 3 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, processor unit 302 may be implemented with one or more of the illustrative components, and access the remaining components remotely using communications unit 304. In another illustrative embodiment, issue database 306 may be implemented remotely from selective consultation system 300 and accessed by processor unit 302 over communications unit 304, for example.

With reference now to Figure 4, a block diagram of a mobility system is depicted in accordance with an illustrative embodiment. Mobility system 400 is an example of one implementation of mobility system 310 in Figure 3.

Mobility system 400 provides mobility for autonomous machines, such as number of autonomous machines 104 in Figure 1. Mobility system 400 may take various forms. Mobility system 400 may include, for example, without limitation, propulsion system 402, steering system 404, braking system 406, and number of mobility components 408. In these examples, propulsion system 402 may propel or move an autonomous machine, such as autonomous machine 112 in Figure 1, in response to commands from a selective consultation system, such as selective consultation system 300 in Figure 3.

Propulsion system 402 may maintain or increase the speed at which an autonomous machine moves in response to instructions received from a processor unit of a navigation system. Propulsion system 402 may be an electrically controlled propulsion system. Propulsion system 402 may be, for example, without limitation, an internal combustion engine, an internal combustion engine/electric hybrid system, an electric engine, or some other suitable propulsion system. In an illustrative example, propulsion system 402 may include wheel drive motors 410. Wheel drive motors 410 may be an electric motor incorporated into a mobility component, such as a wheel, that drives the mobility component directly. In one illustrative embodiment, steering may be accomplished by differentially controlling wheel drive motors 410.

Steering system 404 controls the direction or steering of an autonomous machine in response to commands received from a processor unit of a navigation system. Steering system 404 may be, for example, without limitation, an electrically controlled hydraulic steering system, an electrically driven rack and pinion steering system, a differential steering system, or some other suitable steering system. In an illustrative example, steering system 404 may include a dedicated wheel configured to control number of mobility components 408.

Braking system 406 may slow down and/or stop an autonomous machine in response to commands received from a processor unit of a navigation system. Braking system 406 may be an electrically controlled braking system. This braking system may be, for example, without limitation, a hydraulic braking system, a friction braking system, a regenerative braking system using wheel drive motors 410, or some other suitable braking system that may be electrically controlled. In one illustrative embodiment, a navigation system may receive commands from an external controller, such as computer 110 in Figure 1, to activate an emergency stop. The navigation system may send commands to mobility system 400 to control braking system 406 to perform the emergency stop, in this illustrative example.

Number of mobility components 408 provides autonomous machines with the capability to move in a number of directions and/or locations in response to instructions received from a processor unit of a navigation system and executed by propulsion system 402, steering system 404, and braking system 406. Number of mobility components 408 may be, for example, without limitation, wheels, tracks, feet, rotors, propellers, wings, and/or other suitable components.

The illustration of mobility system 400 in Figure 4 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 5, a block diagram of a sensor system is depicted in accordance with an illustrative embodiment. Sensor system 500 is an example of one implementation of sensor system 308 in Figure 3.

Sensor system 500 includes a number of sensor systems for collecting and transmitting sensor data to a processor unit of a selective consultation system, such as selective consultation system 300 in Figure 3. Sensor system 500 may include obstacle detection system 502, vision system 504, and dead reckoning system 506.

Obstacle detection system 502 may include, without limitation, number of contact switches 508 and ultrasonic transducer 510. Number of contact switches 508 detects contact by an autonomous machine with an external object in the environment, such as worksite environment 100 in Figure 1, for example. Number of contact switches 508 may include, for example, without limitation, bumper switches. Ultrasonic transducer 510 generates high frequency sound waves and evaluates the echo received back. Ultrasonic transducer 510 calculates the time interval between sending the signal, or high frequency sound waves, and receiving the echo to determine the distance to an object.

Vision system 504 detects visual features of a worksite, such as number of worksite features 120 in Figure 1, and sends information about the features detected to a processor unit of a selective consultation system. Vision system 504 may include, without limitation, number of cameras 512, and/or any other suitable visual detection component. Number of cameras 512 may include, for example, without limitation, a color camera, a black and white camera, a digital camera, an infrared camera, a lidar, a pair of cameras used to implement stereo vision, and/or any other suitable camera.

Dead reckoning system 506 estimates the current position of an autonomous machine associated with the selective consultation system. Dead reckoning system 506 estimates the current position based on a previously determined position and information about the known or estimated speed over elapsed time and course. Dead reckoning system 506 may include, without limitation, odometer 514, compass 516, and accelerometer 518. Odometer 514 is an electronic or mechanical device used to indicate distance traveled by a machine, such as autonomous machine 112 in Figure 1. Compass 516 is a device used to determine position or direction relative to the Earth's magnetic poles. Accelerometer 518 measures the change in velocity it experiences in one or more dimensions.

The illustration of sensor system 500 in Figure 5 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 6, a flowchart illustrating a process for selective consultation is depicted in accordance with an illustrative embodiment. The process in Figure 6 may be implemented by a component such as selective consultation system 300 in Figure 3, for example.

The process begins by performing a number of tasks in a worksite (step 602). The number of tasks may be any type of task including, without limitation, a service task, a field task, mowing, snow removal, leaf removal, lawn watering, vacuuming, cleaning, material gathering, material application, tillage, pruning, sensing, data collection, product assembly, and/or any other type of task.

The process identifies an issue that requires human intervention (step 604). The issue may be identified by determining whether a number of conditions exist that constitute an issue. For example, a condition that constitutes an issue may be detection of an unknown or unidentified object by a sensor system associated with the autonomous machine performing the tasks within the worksite. Human intervention may refer, in these examples, to input from a human assistant. For example, human intervention may be input from a human to change how a number of tasks is performed by the number of autonomous machines. In another example, human intervention may be input into the direction of travel by the number of autonomous machines. Direction of travel may be relative to an obstacle on the worksite, for example. In yet another example, human intervention may be input which restores a machine operation parameter or task performance parameter to a value within a preferred range.

The process selects a human to direct the issue to using an issue database (step 606). The process may utilize an assistance selection process, such as assistance selection process 316 in Figure 3 to determine which human from a pool of available human assistance is best suited to resolve the issue, for example. In one illustrative example, the issue may be directed to an owner, such as owner 108 in Figure 1. In another illustrative example, the issue may be directed to a selected human in a pool of human assistants, such as number of human assistants 140 in Figure 1, with the selected human identified by the process as having the requisite skill set or expertise to address the issue identified. The process may identify an issue class for the issue identified, and a human assistant class associated with the issue class identified when determining which human to select for assistance, for example. In another illustrative embodiment, the process may identify the availability of an owner associated with the autonomous machine when determining which human to direct the issue to for resolution.

The process transmits the issue to the human selected (step 608). The issue may be transmitted over a network, such as network 101 in Figure 1, for example. The process then receives a response from the human selected (step 610). The response may be received by a processor unit of a selective consultation system, such as processor unit 302 in Figure 3, for example.

The process determines whether the response is a resolution to the issue (step 612). The response may be, for example, a resolution to the issue, a partial resolution to the issue with an indication that further resolution is needed by another human assistant, an indication that the human selected is unable to resolve the issue, an indication that the human selected is unavailable to resolve the issue, and/or any other suitable response.

If a determination is made that the response is not a resolution, the process returns to step 606. If a determination is made that the response is a resolution, the process applies the resolution to the issue identified (step 614), with the process terminating thereafter.

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

The different advantageous embodiments can take the form of an entirely hardware embodiment, an entirely software embodiment, or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non limiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W) and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples of modems and network adapters are just a few of the currently available types of communications adapters.

The different illustrative embodiments recognize and take into account that currently used methods for robotic assistance often rely on a general pool of centralized human assistance without the ability to select the assistance needed for a specific issue encountered. Current approaches to autonomous machine issue resolution have deficiencies. One such deficiency is that the owner may not be the best person to resolve an issue based on interest, availability, and/or expertise. When an issue is sent to a consultant for resolution, it is desirable to have the issue resolved quickly, correctly, and inexpensively. To meet response requirements, centralized "help desks" are often used which are staffed to meet a certain expected level of demand. If this demand estimate is too low, response times rise. If the number of dedicated human assistants is too high, hourly labor rate costs are too high. Help desks also incur costs for running the centralized facility.

Thus, the different advantageous embodiments provide a system for human assisted field robots using an assistance model that supports geographically distributed and on-demand availability, per incident costs, and use of assistants from low labor cost countries, while maintaining high level of service standards for semi-autonomous and autonomous machines. This system can be used when issues have a resolution time on the order of seconds to minutes, resolution can be performed remotely, and resolution can take advantage of computer and communications technology found globally.

The description of the different advantageous embodiments has been presented for purposes of illustration and description, and is not intended to be exhaustive or limited to the embodiments in the form disclosed. Many modifications and variations will be apparent to those of ordinary skill in the art. Further, different embodiments may provide different advantages as compared to other embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. A method for selective consultation, the method comprising:
performing a number of tasks in a worksite using an autonomous machine;
identifying, by the autonomous machine, an issue that requires human intervention;
selecting a human to direct the issue to using an issue database;
transmitting the issue to the human selected; and
receiving a response from the human selected.

2. The method of claim 1 further comprising:
determining whether the response received is a resolution to the issue identified.

3. The method of claim 2 further comprising:
responsive to a determination that the response received is not the resolution, selecting a next human to direct the issue to using the issue database.

4. The method of claim 2 further comprising:
responsive to a determination that the response received is the resolution to the issue identified, applying the resolution to the issue identified.

5. The method of claim 1, wherein selecting the human further comprises:
identifying an issue class for the issue identified.

6. The method of claim 5, wherein selecting the human further comprises:
identifying a human assistant class associated with the issue class identified.

7. The method of claim 1, wherein selecting the human further comprises:
identifying an availability of an owner associated with the autonomous machine.

8. A system for selective consultation, the system comprising:
a number of autonomous machines configured to perform area coverage tasks in a worksite; and
a selective consultation system configured to resolve issues encountered during operation of the number of autonomous machines in the worksite.

9. The system of claim 8, wherein the selective consultation system identifies a number of issues that require human assistance within the worksite.

10. The system of claim 8, wherein the selective consultation system selects a human assistant from a number of human assistants to address the number of issues that require human assistance within the worksite.

11. The system of claim 10, wherein the number of human assistants are classified according to at least one of results of qualification testing, quality of issue resolution with similar issues in the past, degree of availability, bandwidth of connection between a particular human assistant and the number of autonomous machines, user interface available to the particular human assistant, and cost of issue resolution by the particular human assistant.

12. The system of claim 8, wherein the selective consultation system further comprises:
an issue identification process configured to determine whether a number of conditions exist that constitute an issue;
an assistance selection process configured to select a number of human assistants to address the issue; and
an issue resolution process configured to receive a resolution from the number of human assistants selected and apply the resolution to the issue.

13. The system of claim 8, wherein issues are decisions that the number of autonomous machines cannot make without assistance.

14. The system of claim 9, wherein the number of issues identified are classified into issue classes, and wherein each issue class in the issue classes includes a class definition.

15. The system of claim 10, wherein the selective consultation system accesses an owner schedule to determine whether an owner should be considered for consultation.
